# EUROPÄISCHE PATENTSCHRIFT

(11) **EP 0 433 732 B1**
(45) Veröffentlichungstag und Bekanntmachung des Hinweises auf die Patenterteilung: **19.01.1994**
(21) Anmeldenummer: 90122925.2
(22) Anmeldetag: 30.11.1990
(51) Int. Cl.: A61C 19/10

(54) **Verfahren zur Herstellung von Zahnersatzteilen und Positiv-Arbeitsmodell zur Durchführung des Verfahrens**
Method of manufacture of dental prosthesis and positive model to carry out said procedure
Procédé de fabrication de prothèses dentaires et modèle positif pour ledit procédé

(30) Priorität: 16.12.1989 DE 3941663
(43) Veröffentlichungstag der Anmeldung: 26.06.1991
(73) Patentinhaber: IVOCLAR AG, FL-9494 Schaan (LI)
(72) Erfinder: Rheinberger, Volker, Dr., FL-9490 Vaduz (LI); Moldaschl, Viktor, CH-9472 Grabs (CH)
(74) Vertreter: UEXKÜLL & STOLBERG

(56) Entgegenhaltungen:
- EP-A- 0 234 945
- EP-A- 0 374 446
- US-A- 1 379 689
- US-A- 3 748 741
- US-A- 4 207 678
- US-A- 4 721 464

## Beschreibung

Die Erfindung betrifft ein Verfahren zum Herstellen von Zahnersatzteilen aus Kunststoff oder Keramik mit genau angepaßter Farbgebung und ein zur Durchführung dieses Verfahrens geeignetes Positiv-Arbeitsmodell. Insbesondere betrifft die Erfindung ein Verfahren zum Herstellen von Kronen aus einem transparenten Material wie Kunststoff oder Keramik und einen zur Durchführung dieses Verfahrens geeigneten Zahnstumpf als Arbeitsmodell.

Es ist bekannt, Zahnersatzteile, insbesondere Verblendkronen, aus Kunststoff oder Keramik herzustellen. Diese Zahnersatzteile müssen gefärbt werden, um dem Aussehen der natürlichen Zähne möglichst nahezukommen. Sie werden hierzu vor der Polymerisation (Kunststoff) oder dem Brand (Keramik) bemalt.

Diese Technik wird besonders bei den sogenannten Guß- bzw. Preßkeramiken verwendet wie sie in EP-A-231 773, EP-A-30 850 und EP-A-22 665 beschrieben sind.

Bei dem Verfahren nach EP-A 22 655, das unter der Bezeichnung "Dicor" auf dem Markt ist, kommt eine gießfähige Glaskeramik zur Anwendung, deren gegossene Mikrostrukturen verschiedene Brechung und Reflexion des Lichtes bewirken, die dem Lichtstreuungseffekt der natürlichen Zähne nahekommen. Durch Hitzebehandlung wird dann das Zahnersatzteil auf seine endgültige Festigkeit und optische Qualität gebracht. Zur Farbgebung werden die Zahnersatzteile (Kronen) mit Keramikfarben bemalt, die dann eingebrannt werden.

Die Herstellung derartiger Zahnersatzteile geschieht wie folgt: Der Zahnarzt beschleift einen oder mehrere Zähne, die mit Zahnersatzteilen (Kronen) versehen werden sollen. An das Dentallabor werden vom Zahnarzt ein Abdruck des Restzahns sowie Angaben zur Farbe des herzustellenden Zahnersatzteils geliefert. Die Angaben zur Farbe des Zahnersatzteils werden nach handelsüblichen Farbschlüsseln gemacht, über die der Zahnarzt verfügt.

Der Zahntechniker stellt dann von dem Abdruck des Restzahns ein diesem Restzahn entsprechendes Positiv-Arbeitsmodell aus Gips her, welches räumlich der Mundsituation entspricht.

Mit Hilfe dieses Gipsmodells werden nach bekannten Verfahren gemäß dem oben genannten Stand der Technik Zahnersatzteile wie z.B. Kronen hergestellt. Diese Zahnersatzteile sind meist transparent und müssen, um farblich in die Mundumgebung zu passen, bemalt werden.

Ein Verfahren zum Färben brennbarer Porzellanzahnersätze ist aus AT 0 047 873 bekannt. Dieses Verfahren ermöglicht individuelle Färbungen von Zahnersatzteilen durch Auftragen färbender Lösungen unterschiedlicher Farbpigmente durch den Zahnarzt selbst. Nach dem Überziehen mindestens eines Teils des Porzellanzahnersatzes mit einem Film einer solchen färbenden Lösung läßt man den Film vor dem Auftrag eines anschließenden Films erhärten. Nach Auftrag der vorbestimmten Anzahl von Filmen wird der Zahnersatz erhitzt, wobei die Trägerflüssigkeit verdunstet und das Pigment mit dem Zahnersatz verschmilzt und diesem eine dauerhafte Färbung verleiht.

Ferner ist aus der älteren nicht vorveröffentlichten Anmeldung EP-A-0 374 446, welche einen Stand der Technik gemäß Art. 54(3)4) bildet, ein Verfahren zur Farbgestaltung und Oberflächenversiegelung computergefräster dentaler Formkörper bekannt, bei dem auf dem Formkörper niedrig-viskose härtbare Farbschichten aufgebracht und gehärtet werden und der Formkörper dann mit einer nahezu farblosen, durchscheinenden, härtbaren, glänzenden oder glanzpolierbaren und abrasionsfesten Schicht überzogen wird, die dann gehärtet wird. Außerdem ist aus dieser älteren Anmeldung bekannt, die Farbgebung des computergefrästen Formkörpers durch die Farbe des zur Befestigung des Formkörpers im Munde des Patienten verwendeten Zementes oder durch Bemalung der Klebeflächen des Formkörpers mit Malfarben von innen zu unterstützen.

Die mehr oder weniger große Transparenz der auf die oben beschriebene Weise hergestellten Zahnersatzteile hat nun den Nachteil zur Folge, daß es für den Zahntechniker sehr schwierig wird, allein auf Basis der für das Zahnersatzteil bestimmten Farbe die richtige Farbgebung zu erreichen, da die letztlich sichtbare Zahnfarbe das Resultat einer Mischung aus der gewählten Farbe des Zahnersatzteils und der Farbe des Untergrunds, d.h. des zugeschliffenen Zahnrestes ist. Wenn daher das aus Gips gefertigte Positiv-Arbeitsmodell des Zahntechnikers eine andere Farbe aufweist als der im Mund des Patienten verbliebene Restzahn, - was in der Regel der Fall ist -, wird die resultierende Mischfarbe, das ist die Farbe die man sieht, ebenfalls unterschiedlich sein. Das heißt beispielsweise, daß wenn ein Zahntechniker auf einem sehr hellen Gipsmodell ein Zahnersatzteil aus Kunststoff oder Keramik in der vom Zahnarzt für dasselbe angegebenen Farbe modelliert hat, beim Aufbringen oder Einsetzen dieses Zahnersatzteils auf einen sehr dunklen Zahnrest eine abweichende Mischfarbe erzielt wird. Dieses Ergebnis ist unbefriedigend und genügt den kosmetischen Ansprüchen nicht.

Es wurde nun gefunden, daß sich dieser Nachteil dadurch erfolgreich beheben läßt, daß man auch die Farbe des verbliebenen Restzahns nach einem Farbschlüssel bestimmt und ein Positiv-Arbeitsmodell herstellt, das diese so bestimmte Farbe aufweist.

Aufgabe der Erfindung ist es daher, ein Verfahren zum Herstellen von Zahnersatzteilen aus Kunststoff oder Keramik mit genau angepaßter Farbgebung verfügbar zu machen, mit dem eine größere Präzision bei der Farbgebung als bisher und eine bessere Übereinstimmung der angefertigten Zahnersatzteile mit den Nachbarzähnen bei der Einbringung in den Mund erreichbar ist. Aufgabe der Erfindung ist ferner ein originalgetreues Positiv-Arbeitsmodell zu schaffen, das sich zur Durchführung dieses Verfahrens und damit zur Herstellung eines Zahnersatzteils aus Kunststoff oder Keramik eignet, insbesondere ein räumlich passendes Positiv-Arbeitsmodell, das dem beschliffenen Restzahn farblich so gleich kommt, daß seine Verwendung die Herstellung von Zahnersatzteilen aus Kunststoff oder Keramik mit genau angepaßter Farbgebung in einfacher Weise ermöglicht.

Zur Lösung dieser Aufgabe wird ein Verfahren gemäß Hauptanspruch vorgeschlagen.

Die Unteransprüche 2 und 3 betreffen bevorzugte Ausbildungsweisen des Verfahrens. Ferner wird gemäß den Ansprüchen 4 und 5 ein zur Durchführung dieses Verfahrens geeignetes Positiv-Arbeitsmodell vorgeschlagen, das in der Form dem beschliffenen Restzahn gleich ist und das unter Zuhilfenahme eines Farbschlüssels in einer Farbe eingefärbt worden ist, die dem vorhandenen Restzahn entspricht, so daß durch Kombination der Farbe des Positiv-Arbeitsmodells mit der Farbe des Zahnersatzteils die gleiche Mischfarbe resultiert wie durch Kombination des Restzahns mit dem Zahnersatzteil.

Zur Durchführung des Verfahrens der Erfindung gemäß der ersten Alternative wird zunächst in an sich bekannter Weise ein Zahnersatzteilrohling, z.B. eine Zahnkrone hergestellt. Die Herstellung von keramischen Zahnkronen ist Stand der Technik und wird beispielsweise in den auf Seite 1 genannten Veröffentlichungen beschrieben. Dann wird ein aushärtbares Material, vorzugsweise ein härtbarer Kunststoff in den Hohlraum des Rohlings plaziert, um das Positiv-Arbeitsmodell zu erhalten. Als härtbares Material kommen neben Kunststoff noch Gips, Einbettmassen, Keramik, Komposits, Zemente aber auch elastomere Massen, die gewöhnlich zur Abformung verwendet werden, in Betracht. Sie können heiß-, kalt- oder lichthärtend sein oder nach anderen Mechanismen aushärten. Voraussetzung für die erfindungsgemäße Anwendung ist, daß diese Massen entsprechend der Farbe von Zahnstümpfen eingefärbt werden können. Vorzugsweise haben diese Massen eine geringe Schrumpfung nach der Aushärtung.

Natürlich ist es auch möglich, gemäß der zweiten Alternative ein Modell aus Gips oder einem anderen Modellmaterial entsprechend der Farbe der Zahnstümpfe herzustellen und als Positiv-Arbeitsmodell weiterzuverwenden.

Die Farbe des Zahnstumpfes bzw. des Restgebisses wählt der Zahnarzt z.B. unter Zuhilfenahme eines bekannten Farbschlüssels aus. Werden mehrere Zähne beschliffen, so können die Farben dieser Stümpfe variieren, so daß der Zahnarzt mehrere Farben auswählen muß. Diese Informationen werden an den Zahntechniker weitergegeben, der z.B. aus einem bestehenden Sortiment verschieden eingefärbter Kunststoffe den Kunststoff in der entsprechenden Farbe auswählt und anschließend das Positiv-Arbeitsmodell damit herstellt. Der Zahnstumpf kann aber auch aufgrund dieser Information eingefärbt oder bemalt werden. Es ist ferner möglich, das Modellmaterial entsprechend der Farbe des Restgebisses einzufärben.

Anschließend erfolgt in einer letzten Stufe, die beiden Varianten gemeinsam ist, die Farbgebung des Zahnersatzteilrohlings durch Bemalen und Charakterisieren nach den Farbangaben des Zahnarztes. Die Kombination der beiden mit einem Farbschlüssel vorgegebenen Farben für das Zahnersatzteil (z.B. für die Krone) und für das Arbeitsmodell (Zahnstumpf) erleichtert die Herstellung des Zahnersatzteils wesentlich und führt schnell und sicher zu einem kosmetisch befriedigenden Ergebnis.

Das folgende Beispiel erläutert die Erfindung:

### Beispiel

Entsprechend der EP-A-231 773 und der ersten Alternative des Verfahrens wurde in der ersten Stufe aus Keramik ein Rohling eines Zahnersatzteils (Krone) hergestellt: Hierzu hat der Zahntechniker auf einem üblichen vom Zahnabdruck abgenommenen Arbeitsmodell aus Gips eine Krone aus einem ausbrennbaren Material, vorzugsweise aus Wachs, modelliert. Diese Krone aus ausbrennbarem Material wurde nach bekannten Techniken in eine aushärtbare Einbettmasse eingebettet und das ausbrennbare Material wurde durch Erhitzen entfernt, wodurch in der Einbettmasse ein Hohlraum entstand. In diesen Hohlraum wurde unter Verwendung der in der EP-A-231 773 beschriebenen Maßnahmen zur Herstellung einer Zahnkrone aus Porzellan eine Keramikmasse eingebracht, welche folgende Zusammensetzung besaß:
- Si0₂: 63 %
- Al₂0₃: 17,7 %
- CaO: 1,5 %
- MgO: 0,05 %
- Na₂O: 4,6 %
- K₂O: 11,2 %
- Ce₂O₃: 0,45 %
- BaO: 0,7 %
- B₂O₃: 0,6 %
- Ti0₂: 0,2 %

Die hierbei erhaltene Porzellan-Krone wurde in einem Ofen bei ca. 1200°C gebrannt. Nach dem Brennen wurde die Muffelform abgekühlt und die Krone ausgebettet. Sie hat eine gewisse Transluzenz, d.h. sie ist durchscheinend.

Zur Herstellung des Positiv-Arbeitsmodells in der zweiten Stufe hat der Zahntechniker aus einem bestehenden Sortiment verschiedenfarbener zahnähnlicher lichthärtbarer Kunststoffe entsprechend den vom Zahnarzt angegebenen Informationen die Farbe (z.B. Nr. 20) ausgewählt. Das Sortiment enthält 7 Farben entsprechend dem Biochromatik Farbring von Ivoclar/Vivadent. Mit der Angabe der Farbnummer ist die Farbe eindeutig festgelegt. Das lichthärtende Kunststoffmaterial entspricht dem lichthärtenden Füllungsmaterial "Heliosit" der Firma Vivadent mit der Farbbezeichnung 20. Es handelt sich dabei um ein lichthärtendes, mikrogefülltes Komposit entsprechend der DE-PS 24 03 211. Der Hohlraum der Krone wurde mit einem handelsüblichen Isoliermittel eingepinselt und der lichthärtbare Kunststoff in den Hohlraum eingebracht. In die Masse wurde ein Stumpfdorn eingedrückt. Vorzugsweise ist dies ein transparentes Kunststoffröhrchen. Nach dem Aushärten des lichthärtbaren Kunststoffes mit einer handelsüblichen Polymerisationslampe kann mit Hilfe des Stumpfdorns die Krone gehalten werden.

In der letzten Verfahrensstufe hat der Zahntechniker nach den Farbangaben des Zahnarztes für die Krone unter Verwendung des individuellen Zahnstumpfs die Krone durch Bemalen fertiggestellt. Sie kann jedoch genauso gut durch Verblenden mit Keramik oder Kunststoff fertiggestellt werden. Die Farbgebung erfolgt in jedem Fall schnell und zuverlässig, da das individuelle Positiv-Arbeitsmodell in der Farbe des Zahnstumpfs des Patienten die Voraussetzung für schnelleres und besseres Gelingen schafft. Dies gilt sowohl für transparentere als auch opakere Kronen, da durch das Ausfüllen des Hohlraums der Krone mit dem entsprechenden Stumpfmaterial natürlich auch bei opakeren Kronen ein Farbwechsel eintritt und eine Mischfarbe resultiert.

Zum Unterschied von dem bisherigen Verfahren, nach dem es dem Zufall und der Geschicklichkeit des Zahntechnikers überlassen war, wie genau die Krone bzw. der Zahnersatz mit dem Restgebiß des Patienten übereinstimmt, kann durch die Herstellung des originalgetreuen Positiv-Arbeitsmodells der Erfindung der Techniker die Mundverhältnisse simulieren, indem das Positiv-Arbeitsmodell als nicht nur räumlicher sondern auch als farblicher Untergrund für die Krone dient. Der Vorteil der Erfindung wird in einfacher Weise dadurch erreicht, daß der Zahntechniker nunmehr nach zwei Farbvorgaben arbeitet, nämlich nach der für das Zahnersatzteil bestimmten Farbe und der für das Positiv-Arbeitsmodell bestimmten Farbe, wobei beide Farbvorgaben mit einem Farbschlüssel vom Zahnarzt bestimmt werden.

## Patentansprüche (Patentansprüche für folgende(n) Vertragsstaat(en): CH, DE, FR, GB, IT, LI, SE)

1. Verfahren zum Herstellen von Zahnersatzteilen aus Kunststoff oder Keramik mit genau angepaßter Farbgebung, mit Ausnahme von computergefräßten Zahnersatzteilen,
entweder durch
- Herstellung eines formangepaßten Zahnersatzteilrohlings in an sich bekannter Weise,
- Herstellung eines Positiv-Arbeitsmodells, welches in Form und Farbe dem beschliffenen Restzahn gleichkommt,
oder durch
- Herstellung eines Positiv-Arbeitsmodells, welches in Form und Farbe dem beschliffenen Restzahn gleichkommt,
- Herstellung eines formangepaßten Zahnersatzteilrohlings in an sich bekannter Weise
und jeweils anschließender
- Farbgebung des Zahnersatzteilrohlings ausgehend von einer mit einem Farbschlüssel ausgewählten Farbe für das Zahnersatzteil und unter Verwendung des erhaltenen Positiv-Arbeitsmodells.

2. Verfahren nach Anspruch 1, dadurch gekennzeichnet, daß man das Positiv-Arbeitsmodell mit Hilfe eines Farbschlüssels in einer Farbe einfärbt, die genau der Farbe des Restzahns entspricht.

3. Verfahren nach Anspruch 1, dadurch gekennzeichnet, daß das Zahnersatzteil eine Krone ist.

## Patentansprüche (Patentansprüche für folgende(n) Vertragsstaat(en): AT)

1. Verfahren zum Herstellen von Zahnersatzteilen aus Kunststoff oder Keramik mit genau angepaßter Farbgebung
entweder durch
- Herstellung eines formangepaßten Zahnersatzteilrohlings in an sich bekannter Weise,
- Herstellung eines Positiv-Arbeitsmodells, welches in Form und Farbe dem beschliffenen Restzahn gleichkommt,
oder durch
- Herstellung eines Positiv-Arbeitsmodells, welches in Form und Farbe dem beschliffenen Restzahn gleichkommt,
- Herstellung eines formangepaßten Zahnersatzteilrohlings in an sich bekannter Weise
und jeweils anschließender
- Farbgebung des Zahnersatzteilrohlings ausgehend von einer mit einem Farbschlüssel ausgewählten Farbe für das Zahnersatzteil und unter Verwendung des erhaltenen Positiv-Arbeitsmodells.

2. Verfahren nach Anspruch 1, dadurch gekennzeichnet, daß man das Positiv-Arbeitsmodell mit Hilfe eines Farbschlüssels in einer Farbe einfärbt, die genau der Farbe des Restzahns entspricht.

3. Verfahren nach Anspruch 1, dadurch gekennzeichnet, daß das Zahnersatzteil eine Krone ist.

4. Positiv-Arbeitsmodell zur Durchführung des Verfahrens nach einem der vorhergehenden Ansprüche, dadurch gekennzeichnet, daß das Positiv-Arbeitsmodell in Form und Farbe dem beschliffenen Restzahn gleichkommt.

5. Positiv-Arbeitsmodell nach Anspruch 4, dadurch gekennzeichnet, daß es mit Hilfe eines Farbschlüssels in einer Farbe eingefärbt worden ist, die dem vorhandenen Restzahn entspricht, so daß durch Kombination der Farbe des Arbeitsmodells mit der Farbe des Zahnersatzteils die gleiche Mischfarbe resultiert wie durch Kombination des Restzahns und dem Zahnersatzteil.

## Claims (Claims for the following Contracting State(s): CH, DE, FR, GB, IT, LI, SE)

1. Process for producing dental restorations from plastics or ceramic material with exactly matching colouring, with the exception of computer-ground dental restorations,
either by
- producing a dental restoration blank of matching shape in a manner known per se
- producing a positive working model which matches the shape and colour of the ground remainder of the tooth
or by
- producing a positive working model which matches the shape and colour of the ground remainder of the tooth,
- producing a dental restoration blank of matching shape in a manner known per se
and followed in each case by
- colouring of the dental restoration blank, starting from a colour chosen with a colour key for the dental restoration and using the obtained positive working model.

2. Process according to claim 1, characterized in that, with the aid of a colour key, the positive working model is coloured in a colour which corresponds exactly to the colour of the remainder of the tooth.

3. Process according to claim 1, characterized in that the dental restoration is a crown.

## Claims (Claims for the following Contracting State(s): AT)

1. Process for producing dental restorations from plastics or ceramic material with exactly matching colouring
either by
- producing a dental restoration blank of matching shape in a manner known per se
- producing a positive working model which matches the shape and colour of the ground remainder of the tooth
or by
- producing a positive working model which matches the shape and colour of the ground remainder of the tooth,
- producing a dental restoration blank of matching shape in a manner known per se
and followed in each case by
- colouring of the dental restoration blank starting from a colour chosen with a colour key for the dental restoration and using the obtained positive working model.

2. Process according to claim 1, characterized in that, with the aid of a colour key, the positive working model is coloured in a colour which corresponds exactly to the colour of the remainder of the tooth.

3. Process according to claim 1, characterized in that the dental restoration is a crown.

4. Positive working model for the implementation of the process according to one of the preceding claims, characterized in that the positive working model matches the shape and colour of the ground remainder of the tooth.

5. Positive working model according to claim 4, characterized in that, with the aid of a colour key, it has been coloured in a colour which corresponds to the existing remainder of the tooth, so that by combining the colour of the working model with the colour of the dental restoration the same mixed colour results as by combining the remainder of the tooth and the dental restoration.

## Revendications (Revendications pour l'(les) Etat(s) contractant(s) suivant(s): CH, DE, FR, GB, IT, LI, SE)

1. Procédé de fabrication de prothèses dentaires en matière plastique ou céramique à coloration adaptée de manière précise, à l'exception de prothèses dentaires obtenues par fraisage assisté par ordinateur,
soit par :
- fabrication d'une ébauche de prothèse dentaire adaptée en forme, d'une manière en soi connue et
- fabrication d'un modèle positif qui coïncide en forme et en couleur avec la dent restante taillée,
soit par :
- fabrication d'un modèle positif qui coïncide en forme et en couleur avec la dent restante taillée et
- fabrication d'une ébauche de prothèse dentaire adaptée en forme, d'une manière en soi connue,
suivies, dans chaque cas :
- d'une coloration de l'ébauche de prothèse dentaire à partir d'une couleur choisie pour la prothèse dentaire au moyen d'un nuancier et en utilisant le modèle positif obtenu.

2. Procédé suivant la revendication 1, caractérisé en ce qu'au moyen d'un nuancier, on colore le modèle positif en une couleur qui correspond d'une manière précise à la couleur de la dent restante.

3. Procédé suivant la revendication 1, caractérisé en ce que la prothèse dentaire est une couronne.

## Revendications (Revendications pour l'(les) Etat(s) contractant(s) suivant(s): AT)

1. Procédé de fabrication de prothèses dentaires en matière plastique ou céramique à coloration adaptée de manière précise,
soit par :
- fabrication d'une ébauche de prothèse dentaire adaptée en forme, d'une manière en soi connue et
- fabrication d'un modèle positif qui coïncide en forme et en couleur avec la dent restante taillée,
soit par :
- fabrication d'un modèle positif qui coïncide en forme et en couleur avec la dent restante taillée et
- fabrication d'une ébauche de prothèse dentaire adaptée en forme, d'une manière en soi connue,
suivies, dans chaque cas :
- d'une coloration de l'ébauche de prothèse dentaire à partir d'une couleur choisie pour la prothèse dentaire au moyen d'un nuancier et en utilisant le modèle positif obtenu.

2. Procédé suivant la revendication 1, caractérisé en ce qu'au moyen d'un nuancier, on colore le modèle positif en une couleur qui correspond d'une manière précise à la couleur de la dent restante.

3. Procédé suivant la revendication 1, caractérisé en ce que la prothèse dentaire est une couronne.

4. Modèle positif pour la mise en oeuvre d'un procédé suivant l'une des revendications précédentes, caractérisé en ce que le modèle positif coïncide en forme et en couleur avec la dent restante taillée.

5. Modèle positif suivant la revendication 4, caractérisé en ce qu'au moyen d'un nuancier, il est coloré en une couleur qui coïncide avec la dent restante existante, de sorte que, par combinaison de la couleur du modèle avec la couleur de la prothèse dentaire, on obtient la même couleur mélangée que par combinaison de la dent restante et de la prothèse dentaire.
